# EUROPÄISCHE PATENTSCHRIFT

(11) **EP 2 987 154 B1**
(45) Veröffentlichungstag und Bekanntmachung des Hinweises auf die Patenterteilung: **22.11.2023**
(21) Anmeldenummer: 14721791.3
(22) Anmeldetag: 17.04.2014
(51) Int. Cl.: G08G 1/16

(54) **VERFAHREN UND SYSTEM ZUR VERMEIDUNG EINES AUFFAHRENS EINES FOLGEFAHRZEUGS AUF EIN UNMITTELBARES VORAUSFAHRZEUG SOWIE VERWENDUNG DES SYSTEMS**
METHOD AND SYSTEM FOR PREVENTING A FOLLOWING VEHICLE FROM DRIVING UP ON A VEHICLE DRIVING DIRECTLY IN FRONT AND USE OF THE SYSTEM
PROCÉDÉ ET SYSTÈME PERMETTANT D'ÉVITER QU'UN VÉHICULE SUIVEUR NE HEURTE UN VÉHICULE IMMÉDIATEMENT PRÉCÉDENT, AINSI QU'UTILISATION DU SYSTÈME

(30) Priorität: 19.04.2013 DE 102013207113
(43) Veröffentlichungstag der Anmeldung: 24.02.2016
(73) Patentinhaber: Continental Automotive Technologies GmbH, 30165 Hannover (DE)
(72) Erfinder: STÄHLIN, Ulrich, 65760 Eschborn (DE)
(74) Vertreter: Continental Corporation
(86) Internationale Anmeldenummer: PCT/EP2014/057890
(87) Internationale Veröffentlichungsnummer: WO 2014/170432

(56) Entgegenhaltungen:
- DE-A1-102008 009 900
- YAN G ET AL: "Providing VANET security through active position detection", COMPUTER COMMUNICATIONS, ELSEVIER SCIENCE PUBLISHERS BV, AMSTERDAM, NL, Bd. 31, Nr. 12, 30. Juli 2008 (2008-07-30) , Seiten 2883-2897, XP022849885, ISSN: 0140-3664, DOI: 10.1016/J.COMCOM.2008.01.009 [gefunden am 2008-01-26]
- CAR 2 CAR COMMUNICATIONS CONSORTIUM: "Car 2 Car Communication Consortium Manifesto; Overview of the C2C-CC System; Version 1.1", INTERNET CITATION, 28. August 2007 (2007-08-28), Seiten 1-94, XP002556812, Gefunden im Internet: URL:http://www.car-to-car.org/fileadmin/do wnloads/C2C-CC_manifesto_v1.1.pdf [gefunden am 2009-11-19]
- CAR 2 CAR COMMUNICATIONS CONSORTIUM: "Car 2 Car Communication Consortium Manifesto; Overview of the C2C-CC System; Version 1.1", INTERNET CITATION, 28 August 2007 (2007-08-28), pages 1-94, XP002556812, Retrieved from the Internet: URL:http://www.car-to-car.org/fileadmin/do wnloads/C2C-CC_manifesto_v1.1.pdf [retrieved on 2009-11-19]
- YAN G ET AL: "Providing VANET security through active position detection", COMPUTER COMMUNICATIONS, ELSEVIER SCIENCE PUBLISHERS BV, AMSTERDAM, NL, vol. 31, no. 12, 30 July 2008 (2008-07-30) , pages 2883-2897, XP022849885, ISSN: 0140-3664, DOI: 10.1016/J.COMCOM.2008.01.009 [retrieved on 2008-01-26]
- Rola Naja: "Wireless Vehicular Networks for Car Collision Avoidance" In: "Wireless Vehicular Networks for Car Collision Avoidance", 1 January 2013 (2013-01-01), Springer Verlag, DE, XP055386951, ISBN: 978-1-4419-9562-9 * page 10, paragraph 1.3.1.2 * * page 60, paragraph 2.6.1 * * page 71, paragraph 3.1 * * pages 124,125, paragraph 5.2.3 * * page 124, paragraph 5.2.3 * * page 172, paragraphs 3,4 *

## Beschreibung

Die Erfindung betrifft ein Verfahren zur Vermeidung eines sicherheitskritischen Eingriffs in die Fahrzeugsteuerung eines Folgefahrzeugs aufgrund falscher oder böswillig gefälschter Fahrzeug-zu-X Informationen gemäß Oberbegriff von Anspruch 1 und ein System zur Vermeidung eines sicherheitskritischen Eingriffs in die Fahrzeugsteuerung eines Folgefahrzeugs aufgrund falscher oder böswillig gefälschter Fahrzeug-zu-X Informationen gemäß Oberbegriff von Anspruch 5.

Im Kraftfahrzeugbereich gehört bereits eine Vielzahl unterschiedlicher Umfeldsensorsysteme, welche zur Erfassung unterschiedlicher Umfeldinformationen geeignet sind, zum Stand der Technik. Beispiele für derartige Sensorsysteme sind etwa Kamerasysteme, Radarsysteme, Lidarsysteme oder auch Ultraschallsysteme. Ebenso ist es bereits bekannt, mittels drahtlos kommunizierender Kommunikationssysteme Informationen über die Fahrzeugumgebung nicht nur zu erhalten sondern auch zu versenden. Sowohl die mittels drahtloser Kommunikation als auch mittels Umfeldsensorik erhaltenen Informationen können dabei zur Verbesserung des Fahrkomforts und der Fahrzeugsicherheit herangezogen werden. Insbesondere im Hinblick auf die Fahrzeugsicherheit werden derartige Informationen nicht nur zur Bewarnung des Fahrers sondern unter bestimmten Voraussetzungen und bei ausreichender Zuverlässigkeit auch für autonome Eingriffe in eine Fahrzeuglenk- oder Fahrzeugbremsvorrichtung verwendet.

In diesem Zusammenhang offenbart die WO 2004/085220 A1 ein elektronisches Steuersystem für ein Fahrzeug und ein Verfahren zum Ermitteln eines vom Fahrer unabhängigen Eingriffs in ein Fahrzeugsystem. Dabei ermittelt zunächst ein Fahrerwunschmodul einen Fahrerwunsch aus dem Pedalweg, aus Umsetzbewegungen zwischen den Pedalen und aus dem Bremsdruck in der Bremsanlage. Ein Gefahrenrechner ermittelt anschließend das vorliegende Gefahrenpotential mittels einer Bewertung des Fahrerwunschs und einer Bewertung von weiteren Daten wie etwa Umfeldsensordaten. Außerdem ist das elektronische Steuersystem mit verschiedenen, autonom arbeitenden Assistenzsystemen verbunden. Die Fahrerwunschdaten und die Umfelddaten werden vom Gefahrenrechner ausgewertet und entsprechende Anforderungsbefehle werden an die einzelnen Assistenzsysteme ausgegeben. Die Anforderungsbefehle betreffen dabei sowohl passive als auch aktive Sicherheitseinrichtungen. In Abhängigkeit des erkannten Gefahrenpotentials kann somit ein Fahrzeugsteuereingriff durchgeführt werden.

Die WO 2009/071345 A1 beschreibt ein zentrales Steuergerät für mehrere in einem Kraftfahrzeug vorgesehene Assistenzsysteme, von denen mindestens ein Assistenzsystem mit Umfeldsensoren ausgestattet ist. Das zentrale Steuergerät verbindet die einzelnen Assistenzsysteme und verknüpft die von den Assistenzsystemen erhaltenen Sensorinformationen miteinander, um nichtredundante Sensorinformationen analytisch zu überprüfen und zu plausibilisieren. Zusätzlich kann, z.B. bei einer Kamera, die Sensorinformation durch Abgleich mit einer zeitlich später erfassten Sensorinformation desselben Sensors überprüft werden. Wenn also die Kamera über einen bestimmten Zeitraum bzw. über mehrere Messzyklen hinweg dasselbe Objekt erfasst, so kann dessen Existenz als validiert gelten. Des Weiteren werden die Möglichkeiten beschrieben, eine über Fahrzeug-zu-X-Kommunikation empfangene Information mittels eines Umfeldsensors zu validieren oder eine bereits von einem fremden Sender plausibilisierte Information zu empfangen.

Aus der DE 2008 009 900 B4 sind ein Verfahren und eine Vorrichtung zum Steuern einer Fahrzeugbremse bekannt. Dabei werden neben den Daten eines Pre-Crash-Sensorsystems bzw. eines optischen Erfassungssystems, welches den vorderen Umgebungsbereich des Fahrzeugs erfasst, auch Daten eines Car-to-Car-Kommunikationssystems verarbeitet. Aus den zur Verfügung stehenden Daten von Fahrzeugen, welche in die gleiche Richtung wie das eigene Fahrzeug fahren, werden nun diejenigen Daten mit der höchsten Priorität versehen, die die größte Fahrzeugverzögerung signalisieren. Insbesondere werden die Daten eines Fahrzeugs vor dem unmittelbar vorausfahrenden Fahrzeug mit einer höheren Priorität berücksichtigt als die Daten des unmittelbar vorausfahrenden Fahrzeugs, wenn die Daten des unmittelbar vorausfahrenden Fahrzeugs eine vergleichsweise geringere Verzögerung signalisieren. Das eigene Fahrzeug stellt sich somit auf die größte Verzögerung ein und passt sein Bremsverhalten autonom dieser Verzögerung an.

Nachteilig bei den aus dem Stand der Technik bekannten Verfahren, Vorrichtungen und Systemen ist es jedoch, dass autonome Eingriffe in die Fahrzeugsteuerung entweder eine vergleichsweise langwierige Validierung der zugrunde liegenden Informationen durch voneinander unabhängige Sensormessungen bzw. Fahrzeug-zu-X-Botschaften voraussetzen, oder aber unvalidiert ausgeführt werden, was aufgrund des unvermeidbaren Auftretens von einmaligen Fehlmessungen und falschen oder gar böswillig gefälschten Fahrzeug-zu-X-Botschaften wiederum ein vergleichsweise hohes Sicherheitsrisiko darstellt. Der Erfindung liegt daher die Aufgabe zugrunde, ein Verfahren und System zur Vermeidung eines sicherheitskritischen Eingriffs in die Fahrzeugsteuerung aufgrund falscher oder böswillig gefälschter Fahrzeug-zu-X Informationen bereitzustellen.

Diese Aufgabe wird erfindungsgemäß durch das Verfahren zur Vermeidung eines sicherheitskritischen Eingriffs in die Fahrzeugsteuerung eines Folgefahrzeugs aufgrund falscher oder böswillig gefälschter Fahrzeug-zu-X Informationen gemäß Anspruch 1 und ein korrespondierendes System gemäß Anspruch 3 gelöst.

Die Erfindung betrifft ein Verfahren zur Vermeidung eines sicherheitskritischen Eingriffs in die Fahrzeugsteuerung eines Folgefahrzeugs aufgrund falscher oder böswillig gefälschter Fahrzeug-zu-X Informationen gemäß Anspruch 1.

Daraus ergibt sich der Vorteil, dass falsche oder evtl. sogar böswillig gefälschte Fahrzeug-zu-X-Informationen nicht zu einem sicherheitskritischen Eingriff in die Fahrzeugsteuerung führen können, da der von den Fahrzeug-zu-X-Informationen angeforderte Lenkwinkel bzw. die angeforderte negative Beschleunigung erst bestätigt werden muss, bevor der Eingriff tatsächlich mit diesem Lenkwinkel bzw. dieser Intensität ausgeführt wird.

Die gewählte Formulierung, dass die Fahrzeug-zu-X-Informationen bzw. die Sensorinformationen einen Eingriff in Lenkmittel bzw. einen Eingriff in die Bremsmittel anfordern, ist erfindungsgemäß derart zu verstehen, dass ein geeignetes Fahrzeugsystem auf Basis der Auswertung der Fahrzeug-zu-X-Informationen bzw. der Sensorinformationen einen Eingriff in Lenkmittel bzw. einen Eingriff in die Bremsmittel anfordern.

Der Eingriff kann dabei durch geeignete, fahrerunabhängige Eingriffsmittel erfolgen.

Eine Situation, in welcher der von den Fahrzeug-zu-X-Informationen angeforderte Lenkwinkel bzw. die angeforderte negative Beschleunigung größer als ein von den Sensorinformationen oder Fahrereingaben angeforderte Lenkwinkel bzw. eine angeforderte negative Beschleunigung ist, ergibt sich oftmals, wenn mehr als zwei Fahrzeuge in einer Kolonne fahren. Wenn dabei einem Folgefahrzeug zwei Fahrzeuge vorausfahren, nämlich das unmittelbare Vorausfahrzeug und das dem Vorausfahrzeug vorausfahrende Fahrzeug, so ist das dem Vorausfahrzeug vorausfahrende Fahrzeug für den Fahrer des Folgefahrzeugs bzw. für die Umfeldsensoren des Folgefahrzeugs oftmals nicht erfassbar, da es durch das unmittelbare Vorausfahrzeug verdeckt ist. Die von dem dem Vorausfahrzeug vorausfahrenden Fahrzeug gesendeten Fahrzeug-zu-X-Informationen sind jedoch weiterhin für das Folgefahrzeug erfassbar. Falls dieses dem Vorausfahrzeug vorausfahrende Fahrzeug nun einen starken Bremsvorgang mit resultierender starker negativen Beschleunigung einleitet und dies über die auch als "electronic emergency brake light" bekannte Funktion in Form von Fahrzeug-zu-X-Informationen an seine Umgebung versendet, so kann es sein, dass das Folgefahrzeug diese Informationen erfasst und eine Assistenzeinrichtung im Folgefahrzeug die Notwendigkeit eines Bremseingriffs mit einem durch die Fahrzeug-zu-X-Informationen angeforderten Lenkwinkel bzw. einer angeforderten negativen Beschleunigung erkennt, die zur Vermeidung eines Auffahrens auf das unmittelbare Vorausfahrzeug benötigt wird. Da das unmittelbare Vorausfahrzeug jedoch selbst eine gewisse Reaktionszeit benötigt, um auf den Bremsvorgang des vorausfahrenden Fahrzeugs mit einem eigenen Bremsvorgang zu reagieren, ist eine Bestätigung des von den Fahrzeug-zu-X-Informationen angeforderten Lenkwinkels bzw. der angeforderten negativen Beschleunigung zunächst nicht möglich.

Das Auffahren erfolgt bei einem Fahren von Fahrzeugen in einer Kolonne zwangsläufig auf das jeweilige Vorausfahrzeug, entweder weil dieses selbsttätig und für das Folgefahrzeug unerwartet stark bremst oder weil dieses auf das dem Vorausfahrzeug vorausfahrende Fahrzeug auffährt und dadurch für das Folgefahrzeug unerwartet stark gebremst wird.

Weiterhin ist es erfindungsgemäß vorgesehen, dass der Eingriff mit einem zur Vermeidung des Auffahrens minimal notwendigen Lenkwinkel und/oder einer minimal notwendigen negativen Beschleunigung durchgeführt wird, wenn der von den Fahrzeug-zu-X-Informationen angeforderte Lenkwinkel und/oder die angeforderte negative Beschleunigung größer als der Lenkwinkel und/oder die negative Beschleunigung ist, der/die von den Sensorinformationen und/oder den Fahrereingaben angefordert wird. Zur Bestimmung des minimal notwendigen Lenkwinkel bzw. der minimal notwendigen negativen Beschleunigung wird

die in den Fahrzeug-zu-X-Informationen enthaltene negative Beschleunigung des dem Vorausfahrzeug vorausfahrenden Fahrzeug sowie der zur Verfügung stehende Abstand zum Vorausfahrzeug herangezogen, wobei davon ausgegangen wird, dass das Vorausfahrzeug die negative Beschleunigung des dem Vorausfahrzeug vorausfahrenden Fahrzeugs übernehmen wird. Somit kann auch ohne Bestätigung durch die Sensorinformationen bzw. durch die Fahrereingaben ein Auffahren vermieden werden, wobei gleichzeitig ein übermäßig starkes Verzögern vermieden wird, da die negative Beschleunigung nur mit der minimal notwendigen Intensität ausgeführt wird.

Erfindungsgemäss wird der Eingriff zunächst nur mit dem minimal notwendigen Lenkwinkel bzw. der minimal notwendigen negativen Beschleunigung durchgeführt und auf den vollen angeforderten Lenkwinkel bzw. die volle angeforderte negative Beschleunigung erhöht, sobald diese bestätigt wird.

Alternativ zur beanspruchten Erfindung ist es auch möglich, dass der Eingriff mit einem zur Vermeidung des Auffahrens minimal notwendigen Lenkwinkel und/oder einer minimal notwendigen negativen Beschleunigung ausschließlich dann durchgeführt wird, wenn die Sensorinformationen und/oder die Fahrereingaben überhaupt einen Eingriff anfordern. Daraus ergibt sich der weitere Vorteil, dass über die Sensorinformationen bzw. die Fahrereingaben eine teilweise Bestätigung zumindest insofern erfolgt, als dass prinzipiell ein Eingriff mit einem noch unbestätigten Lenkwinkel bzw. einer noch unbestätigten negativen Beschleunigung erforderlich ist. Dies erhöht die Sicherheit des erfindungsgemäßen Verfahrens.

Alternativ zur beanspruchten Erfindung ist es auch möglich, dass kein Eingriff ausgeführt wird, wenn ausschließlich die Fahrzeug-zu-X-Informationen den Eingriff anfordern. Daraus ergibt sich der Vorteil, dass keine unbestätigten Eingriffe, die ausschließlich auf einer vergleichsweise unzuverlässigen Basis wie den Fahrzeug-zu-X-Informationen beruhen, ausgeführt werden. Somit kann vermieden werden, dass falsche oder sogar böswillig gefälschte Fahrzeug-zu-X-Informationen zu einem Eingriff in die Fahrzeugsteuerung führen.

Optional ist es vorgesehen, dass eine optische, akustische und/oder haptische Warnung an den Fahrer ausgegeben wird, wenn ausschließlich die Fahrzeug-zu-X-Informationen den Eingriff anfordern. Somit ist sichergestellt, dass der Fahrer zumindest darauf hingewiesen wird, dass ggf. eine Situation vorliegt, die kurzfristig einen Eingriff in die Fahrzeugsteuerung erfordert. Der Fahrer kann daraufhin beispielsweise seine Aufmerksamkeit erhöhen und die Situation prüfen. Unvorhergesehene und plötzliche negative Beschleunigungen von einem Folgefahrzeug vorausfahrenden Fahrzeugen stellen eine der häufigsten Auffahrursachen für die Folgefahrzeuge dar, wobei diese Unfallursache durch die Erfindung vorteilhaft verringert werden kann.

Weiterhin ist es vorteilhaft, dass die Fahrzeug-zu-X-Informationen mittels mindestens einer der folgenden Verbindungsarten gesendet bzw. erfasst werden:
- WLAN-Verbindung, insbesondere nach IEEE 802.11p,
- WiFi-Direct,
- ISM-Verbindung (Industrial, Scientific, Medical Band), insbesondere über eine funkverbindungsfähige Schließvorrichtung,
- Bluetooth-Verbindung,
- ZigBee-Verbindung,
- UWB-Verbindung (Ultra Wide Band),
- WiMax (Worldwide Interoperability for Microwave Access),
- Remote-Keyless-Entry-Verbindung,
- funkverbindungsfähige Schließvorrichtung,
- Mobilfunkverbindung, insbesondere GSM-, GPRS-, EDGE-, UMTS- und/oder LTE-Verbindungen und
- Infrarotverbindung.

Diese Verbindungsarten bieten dabei unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend sehr gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Die Erfindung betrifft weiterhin ein System zur Vermeidung eines eines sicherheitskritischen Eingriffs in die Fahrzeugsteuerung eines Folgefahrzeugs aufgrund falscher oder böswillig gefälschter Fahrzeug-zu-X Informationen gemäß Anspruch 5. Daraus ergeben sich die bereits beschriebenen Vorteile.

Entsprechend einer Ausführungsform ist es vorgesehen, dass die Umfeldsensorik einen oder mehrere Sensoren der Gruppe
- Lidarsensor,
- Radarsensor,
- Kamerasensor und
- Ultraschallsensor
umfasst. Die genannten Sensoren eignen sich vergleichsweise gut zur Umfelderfassung im Kraftfahrzeugbereich und sind zudem technisch bereits sehr ausgereift. Da außerdem eine zunehmende Anzahl von Neufahrzeugen bereits serienmäßig mit einzelnen oder mehreren dieser Sensoren ausgestattet ist, erübrigen sich in diesem Fall zusätzliche Ausrüstungskosten.

Außerdem ist es vorgesehen, dass das System das erfindungsgemäße Verfahren ausführt.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein Flussdiagramm, welches die einzelnen Ablaufschritte einer möglichen Ausführungsform des erfindungsgemäßen Verfahrens darstellt und
- Fig. 2: eine Verkehrssituation, in der das erfindungsgemäße Verfahren zum Einsatz kommt.

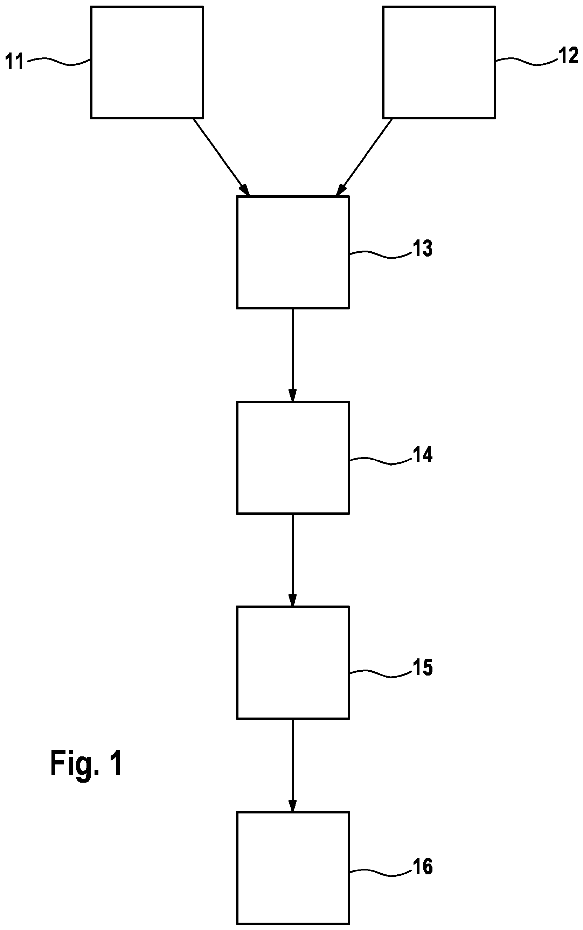

Fig. 1 zeigt ein Flussdiagramm mit einem möglichen Ablauf des erfindungsgemäßen Verfahrens. In Schritt 11 erfasst ein hinter einem Vorausfahrzeug fahrendes Folgefahrzeug Sensorinformationen über einen einsetzenden negativen Beschleunigungsvorgang des Vorausfahrzeugs. Zeitgleich erfasst das Folgefahrzeug in Schritt 12 Fahrzeug-zu-X-Informationen über einen ebenfalls einsetzenden negativen Beschleunigungsvorgang eines dem Vorausfahrzeug vorausfahrenden Fahrzeugs, wobei das dem Vorausfahrzeug vorausfahrende Fahrzeug für die Sensorik des Folgefahrzeugs nicht erfassbar ist, da es durch das Vorausfahrzeug verdeckt ist. Sowohl die erfassten Fahrzeug-zu-X-Informationen als auch die erfassten Sensorinformationen fordern jeweils einen Eingriff in die Bremsmittel des Folgefahrzeugs an, um ein Auffahren auf das Vorausfahrzeug zu vermeiden. Die von den Fahrzeug-zu-X-Informationen angeforderte negative Beschleunigung ist dabei größer als die von den Sensorinformationen angeforderte negative Beschleunigung, da das dem Vorausfahrzeug vorausfahrende Fahrzeug stärker bremst als das unmittelbare Vorausfahrzeug. Die Fahrzeug-zu-X-Informationen können somit nicht durch die Sensorinformationen bestätigt werden. Daher führt das Folgefahrzeug in Schritt 13 zunächst nur einen negativen Beschleunigungsvorgang mit der von den Sensorinformationen angeforderten negativen Beschleunigung durch. In Schritt 14 schließlich intensiviert das Vorausfahrzeug seine negative Beschleunigung und passt diese an das dem Vorausfahrzeug vorausfahrende Fahrzeug an. Dies wird in Schritt 15 vom Folgefahrzeug mittels neuer Sensorinformationen erfasst, woraufhin in Schritt 16 die von den Fahrzeug-zu-X-Informationen angeforderte negative Beschleunigung bestätigt wird und die negative Beschleunigung des Folgefahrzeugs soweit erhöht wird, dass diese nun der von den Fahrzeug-zu-X-Informationen angeforderten negativen Beschleunigung entspricht.

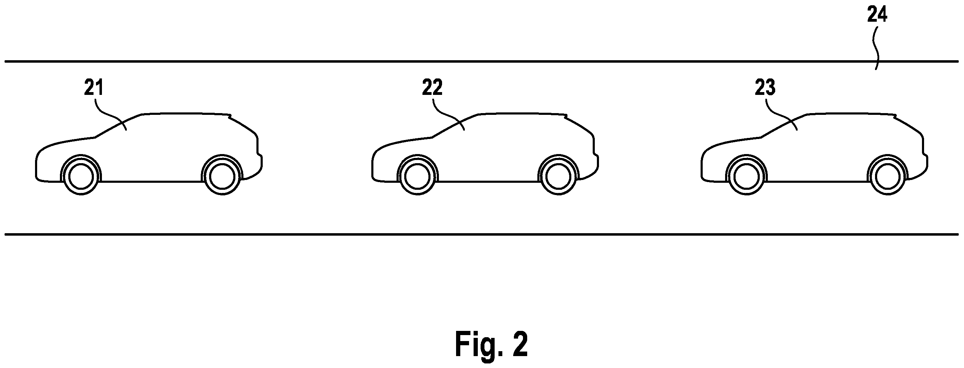

In Fig. 2 ist schematisch eine Verkehrssituation dargestellt, in der das erfindungsgemäße Verfahren zum Einsatz kommt. Fahrzeuge 21, 22 und 23 fahren dabei in Kolonnenformation auf Straße 24. Fahrzeug 22 ist das Vorausfahrzeug von Folgefahrzeug 23, Fahrzeug 21 ist das Vorausfahrzeug 22 vorausfahrende Fahrzeug. Fahrzeug 21 beginnt nun einen plötzlichen negativen Beschleunigungsvorgang, was der Fahrer von Fahrzeug 22 wahrnimmt und daraufhin ebenfalls einen negativen Beschleunigungsvorgang einleitet, der jedoch zunächst weniger stark ist als der negativen Beschleunigungsvorgang von Fahrzeug 21. Gleichzeitig mit dem Einleiten des negativen Beschleunigungsvorgangs sendet Fahrzeug 21 eine die negative Beschleunigung beschreibende Fahrzeug-zu-X-Information, die von Fahrzeug 23 erfasst wird. Eine Erfassung von die negative Beschleunigung von Fahrzeug 21 beschreibenden Sensordaten ist Fahrzeug 23 nicht möglich, da Fahrzeug 21 von Fahrzeug 23 aus gesehen durch Fahrzeug 22 verdeckt ist. Somit kann die von den Fahrzeug-zu-X-Informationen angeforderte negative Beschleunigung zunächst nicht bestätigt werden. Fahrzeug 23 beginnt daraufhin einen negativen Beschleunigungsvorgang mit einer von den Sensorinformationen angeforderten negativen Beschleunigung, also mit einer negativen Beschleunigung, die der negativen Beschleunigung von Fahrzeug 22 entspricht. Gleichzeit wird der Fahrer von Fahrzeug 23 mittels einer optischen Anzeige im Kombiinstrument und einem akustischen Warnton daraufhin gewiesen, dass das Vorausfahrzeug 22 vorausfahrende Fahrzeug 21 einen negativen Beschleunigungsvorgang mit einer höheren negativen Beschleunigung ausführt als unmittelbares Vorausfahrzeug 22. Der Fahrer von Fahrzeug 23 erkennt daraufhin, dass Fahrzeug 21 tatsächlich stärker verzögert als Fahrzeug 22 und sich sowohl Fahrzeug 22 als auch Fahrzeug 23 schnell an Fahrzeug 21 annähern. Daraufhin erhöht er die negative Beschleunigung von Fahrzeug 23 mittels einer Fahrereingabe über die Fahrereingabemittel, in diesem Fall also einer Betätigung des Bremspedals derart, dass die negative Beschleunigung von Fahrzeug 23 im Wesentlichen der negativen Beschleunigung von Fahrzeug 21 entspricht.

## Patentansprüche

1. Verfahren zur Vermeidung eines sicherheitskritischen Eingriffs in die Fahrzeugsteuerung eines Folgefahrzeugs (23) aufgrund falscher oder böswillig gefälschter Fahrzeug-zu-X Informationen,
bei welchem das Folgefahrzeug (23) eine negative Beschleunigung eines unmittelbaren Vorausfahrzeugs (22) mittels Sensorinformationen und eine negative Beschleunigung mindestens eines dem Vorausfahrzeug (22) vorausfahrenden Fahrzeugs (21) mittels Fahrzeug-zu-X-Informationen erfasst, wobei die Fahrzeug-zu-X-Informationen einen Eingriff in Lenkmittel des Folgefahrzeugs (23) in Form eines einzustellenden Lenkwinkels und/oder einen Eingriff in Bremsmittel des Folgefahrzeugs (23) in Form einer einzustellenden negativen Beschleunigung zur Vermeidung des Auffahrens anfordern und wobei der von den Fahrzeug-zu-X-Informationen angeforderte Lenkwinkel und/oder die angeforderte negative Beschleunigung größer ist als ein von den Sensorinformationen und/oder Fahrereingaben angeforderter Lenkwinkel und/oder eine angeforderte negative Beschleunigung,
**dadurch gekennzeichnet, dass** der Eingriff zunächst mit einem zur Vermeidung des Auffahrens minimal notwendigen Lenkwinkel und/oder einer minimal notwendigen negativen Beschleunigung durchgeführt wird, und der Eingriff mit dem von den Fahrzeug-zu-X-Informationen angeforderten Lenkwinkel und/oder der angeforderten negativen Beschleunigung nur dann durchgeführt wird, wenn dieser Lenkwinkel und/oder diese negative Beschleunigung durch die Sensorinformationen und/oder durch die Fahrereingaben bestätigt wird, wobei zur Bestimmung des minimal notwendigen Lenkwinkels bzw. der minimal notwendigen Verzögerung die in den Fahrzeug-zu-X-Informationen enthaltene Verzögerung des dem Vorausfahrzeug (22) vorausfahrenden Fahrzeugs (21) sowie der zur Verfügung stehende Abstand zum Vorausfahrzeug (22) herangezogen werden, wobei davon ausgegangen wird, dass das Vorausfahrzeug (22) die Verzögerung des dem Vorausfahrzeug (22) vorausfahrenden Fahrzeugs (21) übernehmen wird.

2. Verfahren nach Anspruch 1,
**dadurch gekennzeichnet, dass** eine optische, akustische und/oder haptische Warnung an den Fahrer ausgegeben wird, wenn ausschließlich die Fahrzeug-zu-X-Informationen den Eingriff erfordern.

3. System zur Vermeidung eines sicherheitskritischen Eingriffs in die Fahrzeugsteuerung eines Folgefahrzeugs (23) aufgrund falscher oder böswillig gefälschter Fahrzeug-zu-X Informationen,
umfassend das Folgefahrzeug (23) mit Umfeldsensorik, Fahrzeug-zu-X-Kommunikationsmitteln, Lenkeingriffsmitteln, Bremseingriffsmitteln und Fahrereingabemitteln, weiterhin umfassend ein Vorausfahrzeug (22) sowie zumindest ein dem Vorausfahrzeug (22) vorausfahrendes Fahrzeug (21), wobei das Folgefahrzeug (23) konfiguriert ist eine negative Beschleunigung des unmittelbaren Vorausfahrzeugs (22) mittels Sensorinformationen und eine negative Beschleunigung mindestens eines dem Vorausfahrzeug (22) vorausfahrenden Fahrzeugs (21) mittels Fahrzeug-zu-X-Informationen zu erfassen, wobei die Fahrzeug-zu-X-Informationen einen Eingriff in die Lenkmittel des Folgefahrzeugs (23) in Form eines einzustellenden Lenkwinkels und/oder einen Eingriff in die Bremsmittel des Folgefahrzeugs (23) in Form einer einzustellenden negativen Beschleunigung zur Vermeidung des Auffahrens anfordern und wobei der von den Fahrzeug-zu-X-Informationen angeforderte Lenkwinkel und/oder die angeforderte negative Beschleunigung größer ist als ein von den Sensorinformationen und/oder Fahrereingaben angeforderter Lenkwinkel und/oder eine angeforderte negative Beschleunigung,
**dadurch gekennzeichnet, dass** die Lenkeingriffsmittel und/oder die Bremseingriffsmitteln konfiguriert sind, den zunächst Eingriff mit einem zur Vermeidung des Auffahrens minimal notwendigen Lenkwinkel und/oder einer minimal notwendigen negativen Beschleunigung durchzuführen, und den Eingriff mit dem von den Fahrzeug-zu-X-Informationen angeforderten Lenkwinkel und/oder der angeforderten negative Beschleunigung nur dann durchführen, wenn der Lenkwinkel und/oder die negative Beschleunigung durch die Sensorinformationen und/oder durch die Fahrereingaben bestätigt wird, wobei zur Bestimmung des minimal notwendigen Lenkwinkels bzw. der minimal notwendigen Verzögerung die in den Fahrzeug-zu-X-Informationen enthaltene Verzögerung des dem Vorausfahrzeug (22) vorausfahrenden Fahrzeugs (21) sowie der zur Verfügung stehende Abstand zum Vorausfahrzeug (22) herangezogen werden, wobei davon ausgegangen wird, dass das Vorausfahrzeug (22) die Verzögerung des dem Vorausfahrzeug (22) vorausfahrenden Fahrzeugs (21) übernehmen wird.

4. System nach Anspruch 3,
**dadurch gekennzeichnet, dass** die Umfeldsensorik einen oder mehrere Sensoren der Gruppe
- Lidarsensor,
- Radarsensor,
- Kamerasensor und
- Ultraschallsensor
umfasst.

5. System nach mindestens einem der Ansprüche 3 und 4, **dadurch gekennzeichnet, dass** das System ein Verfahren nach mindestens einem der Ansprüche 1 bis 2 ausführt.

## Claims

1. Method for preventing a safety-critical intervention in the vehicle control of a following vehicle (23) on account of incorrect or maliciously falsified vehicle-to-X information,
in which the following vehicle (23) detects a negative acceleration of a vehicle (22) driving directly in front by means of sensor information and a negative acceleration of at least one vehicle (21) driving in front of the vehicle (22) driving in front by means of vehicle-to-X information, wherein the vehicle-to-X information requests an intervention in steering means of the following vehicle (23) in the form of a steering angle to be set and/or an intervention in braking means of the following vehicle (23) in the form of a negative acceleration to be set in order to prevent the rear-end collision with the vehicle, and wherein the steering angle requested by the vehicle-to-X information and/or the requested negative acceleration is/are greater than a steering angle requested by the sensor information and/or driver inputs and/or a requested negative acceleration,
**characterized in that** the intervention is initially performed with a minimum necessary steering angle for preventing the rear-end collision and/or a minimum necessary negative acceleration, and the intervention with the steering angle requested by the vehicle-to-X information and/or the requested negative acceleration is performed only if this steering angle and/or this negative acceleration is/are confirmed by the sensor information and/or by the driver inputs, wherein the deceleration of the vehicle (21) driving in front of the vehicle (22) driving in front, which is included in the vehicle-to-X information, and the available distance from the vehicle (22) driving in front are used to determine the minimum necessary steering angle and/or the minimum necessary deceleration, wherein it is assumed that the vehicle (22) driving in front will adopt the deceleration of the vehicle (21) driving in front of the vehicle (22) driving in front.

2. Method according to Claim 1,
**characterized in that** that a visual, audible and/or haptic warning is output to the driver if only the vehicle-to-X information requests the intervention.

3. System for preventing a safety-critical intervention in the vehicle control of a following vehicle (23) on account of incorrect or maliciously falsified vehicle-to-X information,
comprising the following vehicle (23) with environment sensors, vehicle-to-X communication means, steering intervention means, braking intervention means and driver input means, furthermore comprising the vehicle (22) driving in front and at least one vehicle (21) driving in front of the vehicle (22) driving in front, wherein the following vehicle (23) is configured to detect a negative acceleration of the vehicle (22) driving directly in front by means of sensor information and a negative acceleration of at least one vehicle (21) driving in front of the vehicle (22) driving in front by means of vehicle-to-X information, wherein the vehicle-to-X information requests an intervention in the steering means of the following vehicle (23) in the form of a steering angle to be set and/or an intervention in the braking means of the following vehicle (23) in the form of a negative acceleration to be set in order to prevent the rear-end collision and wherein the steering angle requested by the vehicle-to-X information and/or the requested negative acceleration is/are greater than a steering angle requested by the sensor information and/or driver inputs and/or a requested negative acceleration,
**characterized in that** the steering intervention means and/or the braking intervention means are configured to initially perform the intervention with a minimum necessary steering angle for preventing the rear-end collision and/or a minimum necessary negative acceleration and to perform the intervention with the steering angle requested by the vehicle-to-X information and/or the requested negative acceleration only if the steering angle and/or the negative acceleration is/are confirmed by the sensor information and/or by the driver inputs, wherein the deceleration of the vehicle (21) driving in front of the vehicle (22) driving in front, which is included in the vehicle-to-X information, and the available distance from the vehicle (22) driving in front are used to determine the minimum necessary steering angle and/or the minimum necessary deceleration, wherein it is assumed that the vehicle (22) driving in front will adopt the deceleration of the vehicle (21) driving in front of the vehicle (22) driving in front.

4. System according to Claim 3,
**characterized in that** the environment sensors comprise one or more sensors of the following group:
- lidar sensor,
- radar sensor,
- camera sensor, and
- ultrasound sensor.

5. System according to at least one of Claims 3 and 4,
**characterized in that** the system carries out a method according to at least one of Claims 1 to 2.

## Revendications

1. Procédé pour éviter une intervention critique pour la sécurité dans la commande de véhicule d'un véhicule suiveur (23) en raison d'informations-de-véhicule-vers-X fausses ou falsifiées de manière malveillante,
dans lequel le véhicule suiveur (23) détecte une décélération d'un véhicule immédiatement précédent (22) au moyen d'informations de capteur et une décélération d'au moins un véhicule (21) précédant le véhicule (22) qui précède au moyen d'informations-de-véhicule-vers-X, les informations-de-véhicule-vers-X demandant une intervention dans les moyens de direction du véhicule suiveur (23) sous la forme d'un angle de braquage à régler et/ou une intervention dans les moyens de freinage du véhicule suiveur (23) sous la forme d'une décélération à régler pour éviter la collision, et l'angle de braquage demandé par les informations-de-véhicule-vers-X et/ou la décélération demandée étant supérieur(e) à un angle de braquage demandé par les informations de capteur et/ou aux entrées par le conducteur et/ou à une décélération demandée,
**caractérisé en ce que** l'intervention est d'abord effectuée avec un angle de braquage minimal nécessaire pour éviter la collision et/ou une décélération minimale nécessaire, et l'intervention est effectuée avec l'angle de braquage demandé et/ou la décélération demandée par les informations-de-véhicule-vers-X uniquement si cet angle de braquage et/ou cette décélération est confirmé(e) par les informations de capteur et/ou par les entrées de conducteur ; pour déterminer l'angle de braquage minimum nécessaire ou la décélération minimale nécessaire, la décélération du véhicule (21) circulant devant le véhicule qui précède (22), contenue dans les informations-de-véhicule-vers-X, et la distance disponible par rapport au véhicule qui précède (22), sont utilisées, en partant du principe que le véhicule (22) qui précède va tenir compte de la décélération du véhicule (21) circulant devant le véhicule (22). qui précède.

2. Procédé selon la revendication 1,
**caractérisé en ce qu'**un avertissement visuel, sonore et/ou haptique est émis à l'attention du conducteur lorsque seules les informations-de-véhicule-vers-X nécessitent l'intervention.

3. Système pour éviter une intervention critique pour la sécurité dans la commande de véhicule d'un véhicule suiveur (23) en raison d'informations-de-véhicule-vers-X erronées ou falsifiées de manière malveillante,
comprenant le fait que le véhicule suiveur (23) soit doté de capteurs d'environnement, de moyens de communication de véhicule-vers-X, de moyens d'intervention sur la direction, de moyens d'intervention sur le freinage et de moyens d'entrée par le conducteur, comprenant en outre un véhicule (22) qui précède ainsi qu'au moins un véhicule (21) précédant le véhicule (22) qui précède, le véhicule suiveur (23) étant configuré pour détecter une décélération du véhicule (22) qui précède immédiatement au moyen d'informations de capteur et une décélération d'au moins un véhicule (21) précédant le véhicule (22) qui précède au moyen d'informations-de-véhicule-vers-X, les informations-de-véhicule-vers-X demandant une intervention dans les moyens de direction du véhicule suiveur (23) sous la forme d'un angle de braquage à régler et/ou d'une intervention sur les moyens de freinage du véhicule suiveur (23) sous la forme d'une décélération à régler pour éviter la collision, et l'angle de braquage demandé par les informations-de-véhicule-vers-X et/ou la décélération demandée étant supérieur(e) à un angle de braquage demandé par les informations de capteur et/ou les entrées par le conducteur et/ou à une décélération demandée,
**caractérisé en ce que** les moyens d'intervention sur la direction et/ou les moyens d'intervention sur les freins sont configurés pour effectuer l'intervention initiale avec un angle de braquage minimal nécessaire pour éviter la collision et/ou une décélération minimale nécessaire, et n'effectuent l'intervention avec l'angle de braquage demandé par les informations-de-véhicule-vers-X et/ou la décélération demandée que si l'angle de braquage et/ou la décélération sont confirmés par les informations de capteur et/ou par les entrées opérées par le conducteur ; pour déterminer l'angle de braquage minimal nécessaire ou la décélération minimale nécessaire, on utilise la décélération, contenue dans les informations-de-véhicule-vers-X, du véhicule (21) précédant le véhicule (22) qui précède ainsi que la distance disponible par rapport au véhicule (22) qui précède, en partant du principe que le véhicule (22) qui précède va tenir compte de la décélération du véhicule (21) précédant le véhicule (22) qui précède.

4. Système selon la revendication 3 ;
**caractérisé en ce que** les capteurs d'environnement comprennent un ou plusieurs capteurs du groupe
- capteur lidar,
- capteur radar,
- capteur caméra et
- capteur à ultrasons.

5. Système selon au moins l'une des revendications 3 et 4, **caractérisé en ce que** le système met en oeuvre un procédé selon au moins l'une des revendications 1 à 2.
